# EUROPÄISCHE PATENTANMELDUNG

(11) **EP 4 850 933 A1**
(43) Veröffentlichungstag der Anmeldung: **09.12.2026**
(21) Anmeldenummer: 26177914.4
(22) Anmeldetag: 11.05.2026
(51) Int. Cl.: B60C 19/00, B60C 15/06

(54) **FAHRZEUGLUFTREIFEN**

(30) Priorität: 05.06.2025 DE 102025121992
(71) Anmelder: Continental Reifen Deutschland GmbH, 30175 Hannover (DE)
(72) Erfinder: Dr. Buchholz, Arne, 30175 Hannover (DE); Kapitan, Peter, 020 01 Púchov (SK)
(74) Vertreter: Continental Corporation

(57) **Zusammenfassung**

Die Erfindung betrifft einen Fahrzeugluftreifen, insbesondere Nutzfahrzeugluftreifen, mit in Wulstbereichen (1) endenden Seitenwänden (2) sowie einer entlang der Seitenwände (2) und der Wulstbereiche (1) verlaufenden Karkasse (10), die in den Wulstbereichen (1) um einen Kern (11) und Kernprofile unter Bildung von Hochschlägen (100) umschlingend geführt ist, wobei zwischen der Seitenwand (2) und den Kernprofilen mindestens ein Verstärkungsprofil (6) und mindestens eine Verstärkungslage (17) angeordnet sind, die sich bis in einen Bereich radial außerhalb des Hochschlages (100) erstrecken und ein elektronisches Bauteil (4) zwischen Kernprofil und Seitenwand (2) eingebettet ist, wobei das elektronische Bauteil (4) zwischen der Verstärkungslage (17) und dem Verstärkungsprofil (6) eingebettet ist.

## Beschreibung

Die Erfindung betrifft einen Fahrzeugluftreifen, insbesondere Nutzfahrzeugluftreifen, mit in Wulstbereichen endenden Seitenwänden sowie einer entlang der Seitenwände und der Wulstbereiche verlaufenden Karkasse, die in den Wulstbereichen um einen Kern und Kernprofile unter Bildung von Hochschlägen umschlingend geführt ist, wobei zwischen der Seitenwand und den Kernprofilen mindestens ein Verstärkungsprofil und mindestens eine Verstärkungslage angeordnet sind, die sich bis in einen Bereich radial außerhalb des Hochschlages erstrecken und ein elektronisches Bauteil zwischen Kernprofil und Seitenwand eingebettet ist.

Die Integration eines elektronischen Bauteils in einen Fahrzeugluftreifen ist insbesondere bei Nutzfahrzeugreifen gängige Praxis. Das elektronische Bauteil dient dazu, den Fahrzeugluftreifen zu identifizieren und Kenndaten auslesbar zu speichern. In den meisten Fällen wird das elektronische Bauteil, typischerweise ein RFID-Chip, im Bereich des Wulstes und/oder der Seitenwand derart integriert, dass sowohl der Reifen als auch das elektronische Bauteil in seiner Integrität nicht beeinträchtigt wird, d. h. es wird eine Positionierung mit nur geringer mechanischer Belastung ausgewählt. Zugleich muss sichergestellt sein, dass das elektronische Bauteil zuverlässig ausgelesen werden kann, d. h. das elektronische Bauteil darf insbesondere nicht zu nah an metallischen Komponenten, beispielsweise der Karkasse des Fahrzeugluftreifens angeordnet werden.

Aus der EP 1 977 912 B1 ist es diesbezüglich bekannt, das elektronische Bauteil im Übergangsbereich zwischen einem Kernreiter/Apex und der Seitenwand anzuordnen. Insbesondere bei Reifen für hohe Traglasten, beispielsweise Nutzfahrzeugreifen, werden allerdings zusätzliche Verstärkungslagen im Wulstbereich vorgesehen, insbesondere in denjenigen Bereichen, die für die Aufnahme des elektronischen Bauteils geeignet sind. In diesen Fällen kann das elektronische Bauteil nicht zugleich in Kontakt mit der Seitenwand und dem Kernreiter/Apex stehen, was die Integration im Reifenbauprozess erschwert. Aus der JP 6 423 653 B2 wurde daher bereits vorgeschlagen, das elektronische Bauteil zwischen der Verstärkungslagen und einer anderen Komponente auf der Innenseite des Fahrzeugreifens in Breitenrichtung betrachtet anzuordnen. Hierdurch wird jedoch die Auslesbarkeit des elektronischen Bauteils insbesondere bei Anordnung mehrerer Verstärkungslagen für hochbelastete Nutzfahrzeugreifen erschwert.

Die EP 3 364 782 B1 schlägt einen Nutzfahrzeugreifen mit zwei Karkasslagen vor, bei welchem das elektronische Bauteil im Reifenwulst zwischen der zweiten Karkasslage und der Reifenaußenseite und zwischen einem Wulstband und einem Wulstverstärker angeordnet ist. Derartige Reifen mit zwei Karkasslagen sind jedoch sehr aufwendig und nur in speziellen Anwendungsfällen sinnvoll.

Aufgabe der Erfindung ist es, einen Fahrzeugluftreifen der eingangs genannten Art vorzuschlagen, der aufgrund der Integration von Verstärkungslagen eine besonders hohe Belastbarkeit zu Anwendung insbesondere als Nutzfahrzeugreifen aufweist und dessen integriertes elektronisches Bauteil zuverlässig auslesbar ist.

Zur Lösung der gestellten Aufgabe wird erfindungsgemäß die Ausgestaltung eines Fahrzeugluftreifens mit den Merkmalen des Patentanspruchs 1 vorgeschlagen.

Vorteilhafte Ausgestaltungen und Weiterbildungen der Erfindung sind Gegenstand der abhängigen Ansprüche.

Die erfindungsgemäße Lösung sieht vor, dass das elektronische Bauteil zwischen der Verstärkungslage und dem Verstärkungsprofil eingebettet ist.

Auf diese Weise ist es möglich, dass elektronische Bauteil bereits während des Bauprozesses des Reifenrohlings auf einer Reifenbaumaschine zu integrieren und den solchermaßen erhaltenen Reifenrohling anschließend zu einem Fahrzeugluftreifen auszubilden, bei dem das integrierte elektronische Bauteil trotz der Anwesenheit zahlreicher Verstärkungslagen sicher auslesbar ist.

Die einzelnen Komponenten des Fahrzeugluftreifens, insbesondere Seitenwand, Innenschicht, Profilstreifen, Verstärkungsprofil, Karkasse sind üblicherweise als Gummibauteile ausgeführt und ermöglichen die Integration des elektronischen Bauteils, welches gegebenenfalls mit einem Haftvermittler beschichtet oder in einer Gummimasse eingebettet sein kann, um die Haftung zu den benachbarten Komponenten des Fahrzeugluftreifens herzustellen.

Nach einem Vorschlag der Erfindung ist zwischen der Verstärkungslage und dem Verstärkungsprofil ein Deckstreifen angeordnet und das elektronische Bauteil wird im Übergangsbereich zwischen dem Deckstreifen und der Verstärkungslage eingebettet. Der Deckstreifen ist vorzugsweise ebenfalls als Gummibauteil ausgeführt.

Somit wird erfindungsgemäß das elektronische Bauteil im finalen Fahrzeugluftreifen entweder zwischen dem Verstärkungsprofil und der mindestens einen Verstärkungslage oder zwischen dem Deckstreifen und der Verstärkungslage angeordnet, womit ein ausreichender Abstand zu metallischen Komponenten im Wulstbereich gewahrt ist und eine gute Auslesbarkeit gesichert wird und zum anderen das elektronische Bauteil bereits bei Herstellung des Reifenrohlings auf dem Verstärkungsprofil oder der Verstärkungslage vorkonfektioniert in den Reifenrohling eingebracht werden kann.

Nach einem weiteren Vorschlag der Erfindung ist vorgesehen, dass das elektronische Bauteil auf seiner der mindestens einen Verstärkungslage zugewandten Seite mit dieser in unmittelbarem Kontakt steht.

Das elektronische Bauteil der Erfindung kann insbesondere als RFID-Chip ausgebildet sein.

Eine mögliche Ausführungsform des erfindungsgemäßen Fahrzeugluftreifens sieht vor, dass zwei aufeinanderliegende Verstärkungslagen vorgesehen sind.

Weiterhin ist vorgesehen, dass die mindestens eine Verstärkungslage und/oder der Deckstreifen auf Basis von Polyamid gebildet sind.

Nach einem weiteren Vorschlag der Erfindung wird das Kernprofil von einem radial inneren Kernprofilteil und einem daran anschließenden radial äußeren Kernprofilteil gebildet, wobei der Hochschlag sich bis zum radial äußeren Kernprofilteil erstreckt und das elektronische Bauteil radial außerhalb des Hochschlages angeordnet ist. In axialer Richtung endet der Hochschlag vorzugsweise radial unterhalb des radial äußeren Endes des äußeren Kernprofilteiles.

Insbesondere kann vorgesehen sein, dass im Wulstbereich auf der Karkasse eine Stahlcordeinlage angeordnet ist.

Außerdem kann nach einem weiteren Vorschlag der Erfindung der üblicherweise aus Stahldrähten gebildete Kern mit einer Gummilage überdeckt sein.

Der erfindungsgemäße Fahrzeugluftreifen ist insbesondere als Nutzfahrzeugreifen ausgebildet.

Weitere Ausgestaltungen und Einzelheiten der Erfindung werden nachfolgend anhand der ein Ausführungsbeispiel darstellenden Zeichnung erläutert.

Die einzige Figur zeigt einen vertikalen Schnitt durch einen einzelnen Wulstbereich 1 eines Fahrzeugluftreifens, insbesondere Nutzfahrzeugluftreifens.

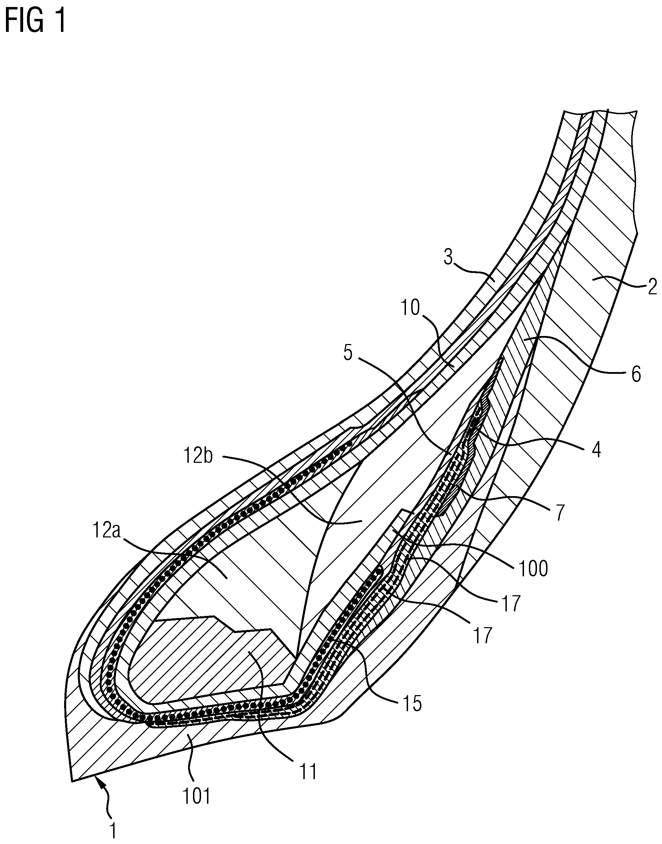

In der vertikalen Zeichenrichtung der Figur 1 erstreckt sich die radiale Richtung des Fahrzeugluftreifens, in der horizontalen Zeichenrichtung die axiale Richtung des Fahrzeugluftreifens.

Ausgehend von einer Innenschicht 3, einer Karkasse 10 und einer Seitenwand 2, die allesamt aus entsprechenden Gummimaterialien gebildet und durch Vulkanisation aus einem Reifenrohling verbunden sind, wird der Wulstbereich 1 gebildet, indem die Karkasse 10 am radial einwärts liegenden Ende in an sich bekannter Weise um einen Kern 11 aus Stahldraht umgeschlagen ist und axial außenseitig in einem Hochschlag 100 endet. Die Karkasse ist vorzugsweise durch einliegende Stahldrähte verstärkt.

Radial nach außen schließt sich an den Kern ein Kernprofil oder Apex an, welches von einem radial inneren Kernprofiteil 12a und einem daran anschließenden radial äußeren Kernprofilteil 12b gebildet ist. Beide Kernprofilteile 12a, 12b bestehen aus Gummimischungen und werden als weitere Bestandteile des Wulstbereiches 1 ebenfalls von der umgeschlagenen Karkasse 10 eingehüllt. Die Trennfuge zwischen beiden Kernprofilteilen 12a und 12b verläuft im dargestellten Ausführungsbeispiel annähernd radial bzw. vertikal.

Da es sich bei dem dargestellten Fahrzeugluftreifen um einen Nutzfahrzeug- oder LKW-Reifen mit hoher Tragfähigkeit handelt, ist dieser mit einer Stahlcordeinlage 15 versehen, die im Wulstbereich 1 umlaufend auf die umgeschlagene Karkasse aufgelegt ist.

Weitere Verstärkungen erfährt der Wulstbereich 1 durch zwei unmittelbar aufeinander liegende Verstärkungslagen 17 aus Polyamid, die ausgehend vom radial innenseitigen Ende des Wulstbereiches an der Stahlcordeinlage 15 außenseitig anliegend über den Hochschlag 100 der Karkasse 10 hinaus radial auswärts verlaufen. Nahe dem radial auswärtigen Ende der Stahlcordeinlage 15 schließt sich zudem ein Profilstreifen 5 aus einem steifen Gummimaterial an, der von radial einwärts nach außen betrachtet zunächst zwischen der inneren Verstärkungslage 17 und der Stahlcordeinlage 15, anschließend zwischen der inneren Verstärkungslage 17 und dem Hochschlag 100 und schließlich zwischen der inneren Verstärkungslage 17 sowie dem radial äußeren Kernprofilteil 12b angeordnet ist.

Außenseitig steht die äußere der beiden aufeinander liegenden Verstärkungslagen 17 zur Seitenwand 2 hin mit einem zwischen diesen positionierten Verstärkungsprofil 6 aus steifem Gummimaterial in Kontakt, bereichsweise auch mit einem zwischenliegenden Deckstreifen 7 auf Basis von Polyamid. Radial innenseitig wird der Wulstbereich 1 von einem an den Seitenstreifen 2 anschließenden Rim Strip 101 aus Gummimaterial eingeschlossen.

Es ist offensichtlich, dass dieser Wulstbereich 1 aufgrund der Vielzahl vorhandenen Profilstreifen 5, Verstärkungsprofil 6, Deckstreifen 7, Verstärkungslagen 17 und Stahlcordeinlage 15 besonders hohe Belastbarkeit aufweist und insbesondere für einen Nutzfahrzeugluftreifen Verwendung findet.

Schließlich ist ein beispielsweise mit einer eindeutigen ID des Fahrzeugreifens programmiertes elektronisches Bauteil 4, insbesondere ein RFID-Chip, zwischen der axial äußeren Verstärkungslage 17 und dem Verstärkungsprofil 6 sowie dem Deckstreifen 7 eingebettet, so dass es größtmöglichen Abstand zu metallischen Teilen z.B. der Karkasse 10 und dem Kern 11 aufweist und sicher in montiertem Zustand des Fahrzeugluftreifens über ein entsprechendes Lesegerät ausgelesen werden kann.

Die Position des elektronischen Bauteiles 4 stellt sicher, dass es stets mindestens 10 mm oberhalb des radial auswärtigen Endes des Hochschlages 100 angeordnet ist.

Durch diese Anordnung ist es zudem möglich, im Reifenbauprozess z.B. eine Einheit aus Seitenwand 2, Wulstdämpfer 101, Verstärkungsprofil 6 und Deckstreifen 7 vorzufertigen und über einen Servicer der Reifenbaumaschine zuzuführen, wobei vor oder während des Auflegens auf die Reifenbaumaschine das elektronische Bauteil 4 auf die Einheit aufgebracht und im weiteren Bauprozess eingebettet werden kann, was die Herstellung des Fahrzeugluftreifens sehr einfach gestaltet. Sobald alle Komponenten auf der Reifenbaumaschine komplettiert sind, wird der solchermaßen erhaltene Reifenrohling durch Vulkanisation zum dargestellten Fahrzeugluftreifen mit eingebettetem elektronischen Bauteil 4 verbunden.

Das elektronische Bauteil 4 kann auch radial unterhalb des Deckstreifens 7 unmittelbar zwischen Verstärkungsprofil 6 und Verstärkungslage 17 angeordnet sein.

### Bezugszeichenliste:

- 1:: Wulstbereich
- 2:: Seitenwand
- 3:: Innenschicht
- 4:: elektronisches Bauteil
- 5:: Profilstreifen
- 6:: Verstärkungsprofil
- 7:: Deckstreifen
- 10:: Karkasse
- 11:: Kern
- 12a:: radial inneres Kernprofilteil
- 12b:: radial äußeres Kernprofilteil
- 15:: Stahlcordeinlage
- 17:: Verstärkungslagen
- 100:: Hochschlag
- 101:: Rim Strip

## Patentansprüche

1. Fahrzeugluftreifen, insbesondere Nutzfahrzeugluftreifen, mit in Wulstbereichen (1) endenden Seitenwänden (2) sowie einer entlang der Seitenwände (2) und der Wulstbereiche (1) verlaufenden Karkasse (10), die in den Wulstbereichen (1) um einen Kern (11) und Kernprofile unter Bildung von Hochschlägen (100) umschlingend geführt ist, wobei zwischen der Seitenwand (2) und den Kernprofilen mindestens ein Verstärkungsprofil (6) und mindestens eine Verstärkungslage (17) angeordnet sind, die sich bis in einen Bereich radial außerhalb des Hochschlages (100) erstrecken und ein elektronisches Bauteil (4) zwischen Kernprofil und Seitenwand (2) eingebettet ist, **dadurch gekennzeichnet, dass** das elektronische Bauteil (4) zwischen der Verstärkungslage (17) und dem Verstärkungsprofil (6) eingebettet ist.

2. Fahrzeugluftreifen nach Anspruch 1, **dadurch gekennzeichnet, dass** zwischen der Verstärkungslage (17) und dem Verstärkungsprofil (6) ein Deckstreifen (7) angeordnet ist und das elektronische Bauteil (4) im Übergangsbereich zwischen dem Deckstreifen (7) und der Verstärkungslage (17) eingebettet ist.

3. Fahrzeugluftreifen nach Anspruch 1 oder 2, **dadurch gekennzeichnet, dass** das elektronische Bauteil (4) auf seiner der Verstärkungslage (17) zugewandten Seite mit dieser in unmittelbarem Kontakt steht.

4. Fahrzeugluftreifen nach einem der Ansprüche 1 bis 3, **dadurch gekennzeichnet, dass** das elektronische Bauteil (4) als RFID-Chip ausgebildet ist.

5. Fahrzeugluftreifen nach einem der Ansprüche 1 bis 4, das zwei aufeinanderliegende Verstärkungslagen (17) vorgesehen sind.

6. Fahrzeugluftreifen nach einem der Ansprüche 1 bis 5, **dadurch gekennzeichnet, dass** die mindestens eine Verstärkungslage (17) und/oder der Deckstreifen (7) auf Basis von Polyamid gebildet sind.

7. Fahrzeugluftreifen nach einem der Ansprüche 1 bis 6, dass das Kernprofil von einem radial inneren Kernprofilteil (12a) und einem daran anschließenden radial äußeren Kernprofilteil (12b) gebildet ist, wobei der Hochschlag (100) sich bis zum radial äußeren Kernprofilteil (12b) erstreckt und das elektronische Bauteil (4) radial außerhalb des Hochschlages (100) angeordnet ist.

8. Fahrzeugluftreifen nach einem der Ansprüche 1 bis 7, **dadurch gekennzeichnet, dass** im Wulstbereich (1) auf der Karkasse (10) eine Stahlcordeinlage (15) angeordnet ist.

9. Fahrzeugluftreifen nach einem der Ansprüche 1 bis 8, **dadurch gekennzeichnet, dass** der Kern (11) mit einer Gummilage (13) überdeckt ist.

10. Fahrzeugluftreifen nach einem der Ansprüche 1 bis 9, **dadurch gekennzeichnet, dass** das elektronische Bauteil (4) mit einem Haftvermittler beschichtet oder in einer Gummimasse eingebettet ist.
